## Europäisches Patentamt
## European Patent Office
## Office européen des brevets

(11) Publication number: **0 181 912**
**B1**

# (12) EUROPEAN PATENT SPECIFICATION

(45) Date of publication of the patent specification:
**10.08.88**

(51) Int. Cl.⁴: **B 60 V 1/14**

(21) Application number: **85902703.9**

(22) Date of filling: **14.05.85**

(86) International application number:
**PCT/SE 85/00204**

(87) International publication number:
**WO 85/05335 (05.12.85 Gazette 85/26)**

(54) **A HOVERCRAFT WITH IMPROVED MANEUVERABILITY.**

(30) Priority: **17.05.84 SE 8402670**

(43) Date of publication of application:
**28.05.86 Bulletin 86/22**

(45) Publication of the grant of the patent:
**10.08.88 Bulletin 88/32**

(84) Designated Contracting States:
**DE FR GB IT**

(56) References cited:
**AU-B-38 210**
**SE-B-362 222**
**SE-B-371 146**
**US-A-3 209 848**
**US-A-3 548 967**
**US-A-3 656 575**

(73) Proprietor: **SKÖLD, Björn- Ake, Vikingavägen 16, S-605 90 Norrköping (SE)**

(72) Inventor: **SKÖLD, Björn- Ake, Vikingavägen 16, S-605 90 Norrköping (SE)**

(74) Representative: **Onn, Thorsten, AB Stockholms Patentbyra Zacco & Bruhn P.O. Box 3129, S-103 62 Stockholm (SE)**

EP 0 181 912 B1

LIBER, STOCKHOLM 1988

## Description

The invention concerns a hovercraft in accordance with the preamble of claim 1 such as known e.g. from US-A-36 56 575.

The invention is characterized in that the hovercraft is divided in three sections, namely a passenger cabin section and two air cushioning sections, one on each side of the passenger cabin section and connected thereto. One advantage with the motors and fans being mounted on the air cushioning sections is that the passenger cabin section can be effectively sound and vibration insulated from the motors and the fans. One motor and one fan may be mounted on each air cushioning section. In another embodiment of the invention the passenger cabin section can be raised and lowered in respect of the air cushioning sections. One advantage with this possibility is that it facilitates the access to the passenger cabin section, which is of great advantage in transport of disabled persons or persons transported on stretchers.

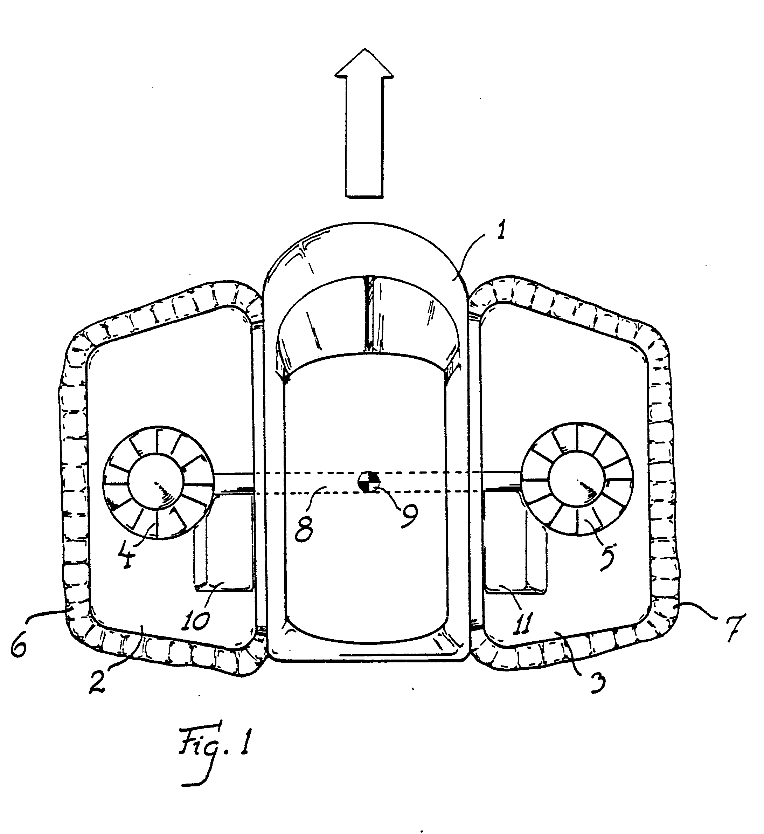

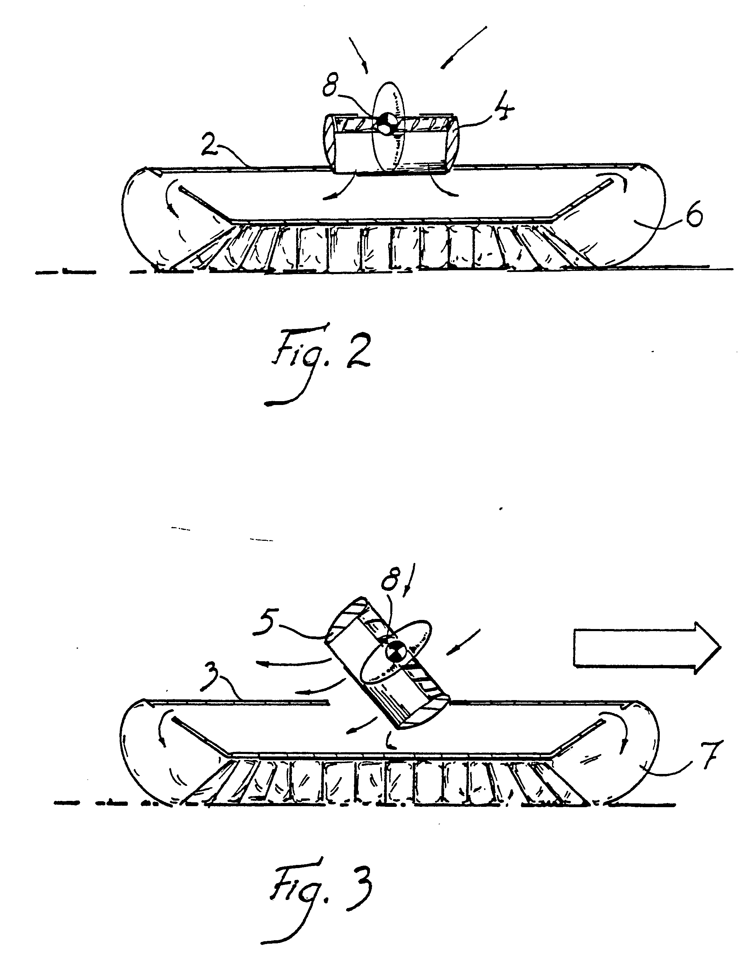

In the drawings is shown an example of a hovercraft according to the invention. In Fig. 1 is shown a top plan view of the hovercraft, in Fig. 2 is shown a lengthwise section of one of the air cushioning sections showing the fan in only lifting state, in Fig. 3 is shown the same section as in Fig. 2 but the fan is in a state for both lifting and propulsion.

In Fig. 1 shown a top plan view of the hovercraft according to the invention, incorporating a passenger cabin section 1 with one air cushioning section 2, 3 on each side of the passenger cabin section. On each air cushioning section is mounted a motor 10, 11 and a fan 4, 5 and also a skirting 6, 7. As the fans 4, 5 are mounted on the air cushioning sections 2, 3 relatively long moment arms 8 from the center of gravity 9 of the craft are obtained. As shown in Fig. 1 the fans 4, 5 are preferably so arranged on the air cushioning sections that the connection line between the centers of the fans passes through the center of gravity 9. Through this arrangement of the fans the craft has achieved an improved maneuverability and also a better stability. By the arrangement of two separate sections carrying the motors 10, 11 and the fans 4, 5 it has also been possible to obtain a much better sound and vibration insulation of the passenger cabin section 1.

In accordance with one aspect of the invention the passenger cabin section 1 can be raised and lowered in respect of the air cushioning sections 2, 3.

## Claims

1. Hovercraft including a passenger cabin (1) and air cushions (2, 3) carrying the passenger cabin (1) and incorporating motordriven fans (4, 5) for lifting and propulsion of the craft, characterized in that the craft is divided in three sections wherein the passenger cabin (1) is an intermediate section with one air cushioning section (2, 3) being provided on each side of the passenger cabin section (1) and connected to the passenger cabin section (1).

2. Hovercraft according to claim 1, wherein one motor (10, 11) and one fan (4, 5) being provided on each one of the air cushioning sections (2, 3) and wherein the fans (4, 5) are located on the air cushioning sections (2, 3) so that a connection line (8) between the two fans passes essentially through the center of gravity (9) of the craft.

3. Hovercraft according to claim 1, wherein the passenger cabin section (1) can be raised and lowered in relation to the air cushioning sections (2, 3).

## Patentansprüche

1. Luftkissenfahrzeug mit einer Passagierkabine (1) und die Passagierkabine (1) tragenden Luftkissen (2, 3), welche motorisch angetriebene Gebläse (4, 5) zum Erheben und Antrieb des Fahrzeugs enthalten, dadurch gekennzeichnet, dass das Fahrzeug in drei Teile aufgeteilt ist, worin die Passagierkabine (1) ein Zwischenteil mit einem daran angeschlossenen Luftfederungsteil (2, 3) an jeder Seite des Passagierkabinenteils (1) ist.

2. Luftkissenfahrzeug nach Anspruch 1, worin ein Motor (10, 11) und ein Gebläse (4,5) an jedem der Luftfederungsteile (2,3) vorgesehen sind und worin die Gebläse (4, 5) auf den Luftfederungsteilen (2,3) placiert sind, so dass eine Anschlusslinie (8) zwischen den zwei Gebläsen wesentlich durch den Schwerpunkt (9) des Fahrzeugs geht.

3. Luftkissenfahrzeug nach Anspruch 1, worin der Passagierkabinenteil (1) im Verhältnis zu den Luftfederungsteilen (2, 3) erhoben und gesenkt werden kann.

## Revendications

1. Aéroglisseur comprenant une cabine des passagers (1) et des coussins d'air (2, 3) portant la cabine des passagers (1) et comprenant des ventilateurs (4, 5) actionnés par moteurs pour permettre la sustentation et la propulsion de l'aéroglisseur, caractérisé en ce que l'aéroglisseur est divisé en trois sections, la cabine des passagers (1) constituant une section intermédiaire bordée de part et d'autre d'une section (2, 3) à coussin d'air, ces dernières deux sections (2, 3) étant reliées à la section (1) faisant cabine des passagers.

2. Aéroglisseur selon la revendication 1, dans lequel chacune des sections (2, 3) à coussin d'air comporte un moteur (10, 11) et un ventilateur (4, 5), lesdits ventilateurs (4, 5) étant disposés sur les sections (2, 3) à coussins d'air de telle manière que la ligne (8) reliant les deux ventilateurs passe sensiblement par le centre de gravité (9) de l'aéroglisseur.

3. Aéroglisseur selon la revendication 1, dans lequel la section (1) faisant cabine des passagers peut être levée et abaissée par rapport aux sections (2, 3) à coussins d'air.

*Fig. 1*

Fig. 2

Fig. 3